# FASCICULE DE BREVET EUROPEEN

(11) **EP 2 906 484 B1**
(45) Date de publication et mention de la délivrance du brevet: **22.03.2017**
(21) Numéro de dépôt: 13815145.1
(22) Date de dépôt: 10.10.2013
(51) Int. Cl.: B65D 83/54, B65D 83/36

(54) **VALVE DOSEUSE DE DISTRIBUTION D'UN AEROSOL**
DOSIERVENTIL ZUR ABGABE EINES AEROSOLS
METERING VALVE FOR DISPENSING AN AEROSOL

(30) Priorité: 12.10.2012 FR 1259774
(43) Date de publication de la demande: 19.08.2015
(73) Titulaire: NEMERA LA VERPILLIERE, 38290 La Verpillière (FR)
(72) Inventeur: REGARD, Alain, F-01700 Beynost (FR); GAUTHIER, Grégoire, F-38300 Bourgoin-Jallieu (FR); JOLY, Olivier, F-38000 Grenoble (FR)
(74) Mandataire: Vallée-Thiollier, Clémence-Olivia Laure Marie
(86) Numéro de dépôt international: PCT/IB2013/059258
(87) Numéro de publication internationale: WO 2014/057446

(56) Documents cités:
- EP-A1- 0 803 449
- WO-A2-2004/022143
- FR-A1- 2 850 166
- US-A- 4 702 400

## Description

L'invention concerne le domaine technique des valves doseuses de distribution d'un aérosol, et plus particulièrement des valves à rétention pour la distribution de produit pharmaceutique.

Les valves de distribution de produit fluide, notamment les valves doseuses pour distribuer des produits pharmaceutiques sous forme de sprays aérosols sont connues. Elles comportent généralement un corps de valve cylindrique dans lequel se trouve une chambre de dosage s'étendant entre deux joints, un joint haut et un joint bas, une tige de valve coulissant de manière étanche dans la chambre de dosage entre une position de repos, une position de distribution et une position basse finale. Le corps de valve est généralement fixé sur le col d'un récipient contenant le produit à distribuer au moyen d'une capsule sertie sur le col. En tant qu'exemple, on peut citer la demande EP 0 803 449, qui décrit une valve connue de l'état de la technique et une valve selon le préambule de la revendication 1.

Un problème que pose ce type de valve concerne le volume ou la quantité de la dose à distribuer. En effet, de telles valves servent généralement à distribuer des doses de produits pharmaceutiques, où les doses doivent être particulièrement précises et distribuées de manière constante. Ces doses doivent être d'autant plus précises que la valve doseuse contient en général de la poudre en suspension dans une phase liquide comprenant un gaz propulseur liquéfié. Aussi, la valve doit à la fois délivrer un volume de liquide et poudre répétable à chaque administration, le liquide étant le vecteur de la poudre, mais également une quantité de poudre (masse sèche) très régulière. Il est donc important que la valve puisse distribuer tout au long de son utilisation une dose rigoureusement identique du produit.

La présente invention a notamment pour but de proposer une valve doseuse permettant de limiter les variations des doses distribuées au cours de l'utilisation du dispositif de dosage.

A cet effet, l'invention concerne une valve doseuse de distribution d'un aérosol, comportant une chambre de dosage et une tige de valve munie d'une extrémité disposée du côté d'un réservoir et d'une extrémité de distribution et montée coulissante dans la chambre de dosage sous l'effet d'un ressort, entre une première position haute, dite position de repos, une deuxième position, dite position intermédiaire de remplissage de la chambre de dosage, et une troisième position, dite position basse finale, dans laquelle le ressort est comprimé, la tige de valve comportant un orifice d'expulsion reliant la chambre de dosage à l'extrémité de distribution lorsque la tige est en position basse finale, et un passage de remplissage reliant un réservoir à la chambre de dosage lorsque la tige de valve est en position intermédiaire de remplissage, valve dans laquelle la chambre de dosage comporte un compartiment cylindrique haut et un compartiment cylindrique bas, le diamètre du compartiment haut étant plus grand que le diamètre du compartiment bas.

Ainsi, on propose une valve dans laquelle la chambre de dosage a une géométrie telle qu'elle présente une diminution de section dans sa zone entrée, du fait qu'elle présente un diamètre inférieur. Cette diminution de section est particulièrement intéressante en ce qu'elle permet un remplissage plus rapide de la chambre lorsque la tige de valve est en position intermédiaire de remplissage. En effet, comme la section de passage est diminuée, le fluide circule plus vite dans cette zone pour remplir la chambre de dosage. Outre le remplissage plus rapide, cette vitesse du fluide est moins sensible aux frottements au moment de l'entrée dans la chambre, si bien que la poudre se trouvant en suspension dans le liquide à distribuer risque moins de s'accrocher aux parois lors de frottements ayant lieu à l'entrée de la chambre. Il en résulte que la dose de produit à distribuer présente une quantité de poudre plus régulière.

En outre, la mise en oeuvre d'un remplissage rapide de la chambre de dose est particulièrement intéressante dans le cas d'une valve à rétention. En effet dans une valve à rétention, la chambre de dosage est isolée du réservoir d'une part lorsque la tige est en position de repos, d'autre part lorsque la tige est en position basse finale, si bien que la chambre de dosage ne peut se remplir que sur une période relativement limitée, sur une partie de la course de la tige entre la position de repos et la position basse finale. Aussi, la chambre de dose doit pouvoir se remplir très vite de la dose à distribuer, et de façon précise.

On notera que la présence d'un compartiment cylindrique haut de diamètre plus important permet de limiter la dimension axiale de la chambre de dosage, donc de la valve. En effet, si l'on utilisait un unique diamètre relativement faible, il serait nécessaire de prévoir une chambre de dosage plus longue, ce qui nuit à la compacité du dispositif.

Dans la présente description, les expressions « haut » et « bas » font référence à la position de la tige de valve par rapport au réservoir sur lequel est rapportée la valve doseuse. Ainsi, une position basse de la tige correspond à une position dans laquelle la tige est plus proche du réservoir que dans le cas d'une position haute de la tige.

On comprend que l'on entend par « le ressort est comprimé » le fait que le ressort se trouve dans une configuration de compression maximale dans la valve, toutefois cela ne signifie pas nécessairement que les spires du ressort sont jointives.

La valve doseuse est généralement destinée à être montée sur un col d'un réservoir contenant un produit fluide à distribuer sous la forme d'un aérosol, tout particulièrement un produit pharmaceutique. Elle est destinée à être utilisée en position inversée, également appelée « tête en bas ».

La valve doseuse peut en outre comporter l'une ou plusieurs des caractéristiques suivantes, prises seules ou en combinaison.
- Un épaulement est ménagé à l'interface entre les deux compartiments, la position basse finale de la tige de valve étant définie par une mise en butée d'un épaulement ménagé sur la tige de valve avec l'épaulement ménagé à l'intérieur de la chambre de dosage à l'interface entre les deux compartiments. Il en résulte que la tige de valve est davantage centrée par rapport à la chambre de dosage, c'est-à-dire qu'elle ne risque pas d'être désaxée. En effet, comme la butée se trouve dans la chambre de dosage, l'orientation axiale de la tige de valve est davantage garantie que dans les valves de l'état de la technique, où la position basse finale est généralement définie par une mise en butée de la tige de valve contre le ressort se trouvant dans un état totalement comprimé, avec des spires jointives. Le fait que la position basse finale soit définie par le ressort en fin de course, c'est-à-dire lorsque le ressort arrive à son état de compression complète, présente un risque de décaler légèrement l'extrémité de la tige de valve, du fait d'un léger décalage ou chevauchement possible des spires du ressort lorsqu'elles sont jointes. Hors, le moindre décalage de l'extrémité de la tige risque de créer une légère perte d'étanchéité entre la tige et un joint haut et/ou un joint bas de la chambre de dosage. Cette perte d'étanchéité peut avoir faire varier la dose de liquide et/ou de poudre distribuées. En outre, dans le cas où la valve doseuse est équipée d'un système compteur de dose, la position de la tige de valve doit être particulièrement précise car c'est la position de la tige par rapport au corps de valve ou à une férule qui permet au compteur de considérer qu'une dose a été délivrée ou non. Ainsi, les performances du compteur de doses dépendent de la précision de la position de la tige de valve. Or, lorsque la tige de valve est stoppée par le ressort en fin de course, elle est stoppée à une distance qui peut varier d'une dose à l'autre, et encore plus d'une valve doseuse à l'autre, d'une part parce que la configuration comprimée d'un ressort peut dépendre de la force exercée par l'utilisateur ou encore de la déformation plastique du ressort au cours du temps, d'autre part parce que le ressort peut avoir tendance, au cours de sa compression, à se mettre de travers dans son logement, si bien que cela peut légèrement décaler la hauteur de la tige de valve en position basse finale.
- L'épaulement ménagé sur la tige de valve est agencé de sorte que la surface de butée s'étend dans un plan perpendiculaire à l'axe de la tige de valve. Il comprend de préférence une saillie ménagée sur la tige de valve, la saillie pouvant être annulaire ou semi-annulaire, par exemple sous forme d'un godron annulaire. L'épaulement ménagé à l'intérieur de la chambre de dosage peut par ailleurs comprendre une saillie annulaire ou semi-annulaire
- L'épaulement ménagé sur la tige de valve est agencé de sorte que la surface de butée s'étend dans un plan non perpendiculaire à l'axe de la tige de valve. Par exemple, il comprend une saillie annulaire ou semi-annulaire coopérant par un appui conique ou sphérique avec la chambre de dosage, ou bien une surface conique ou sphérique coopérant avec une saillie annulaire ou semi-annulaire ménagée dans la chambre de dosage.
- L'épaulement ménagé sur la tige de valve est porté par une saillie assurant également une fonction de mise en butée de la tige de valve avec une paroi haute de la chambre de dosage lorsque la tige de valve est en position de repos. Ainsi, on utilise une même saillie pour assurer à la fois la fonction de butée définissant la position basse finale et celle définissant la position de repos. Il en ressort que l'on obtient des doses plus précises, puisque la valve présente uniquement les tolérances de fabrication de cette saillie, alors que dans le cas où les butées seraient assurées par deux parties distinctes et éloignées l'une de l'autre, la valve présenterait les tolérances de fabrication de chacune de ces parties.

- Le compartiment cylindrique bas et/ou le compartiment cylindrique haut a une hauteur dans la dimension axiale du dispositif comprise entre ¼ et ¾ de la hauteur totale de la chambre de dosage. Ainsi, le compartiment cylindrique bas s'étend sur une hauteur suffisante pour avoir un effet notable sur la vitesse de remplissage de la chambre de dosage.
- En position basse finale de la tige, le ressort n'est pas complétement comprimé.
- L'extrémité de la tige de valve comprend une première surface d'appui contre un joint d'entrée de la chambre de dosage assurant une première étanchéité de la chambre de dosage par rapport à un réservoir lorsque la tige est en position de repos. De préférence, cette extrémité de la tige de valve comprend une partie rapportée, formant un capuchon, la première surface d'appui contre le joint d'entrée étant ménagée sur ce capuchon.
- La première étanchéité entre l'extrémité de la tige et le joint est réalisée dans la direction axiale du dispositif.
- La tige de valve comprend une deuxième surface d'appui contre un joint d'entrée de la chambre de dosage assurant une deuxième étanchéité de la chambre de dosage par rapport à un réservoir lorsque la tige est en position basse finale.
- La deuxième étanchéité entre la tige et le joint est réalisée dans la direction radiale du dispositif.
- La valve comprend une ouverture annulaire continue d'entrée de l'aérosol dans la chambre de dosage, l'ouverture étant définie par l'espace entre un joint d'entrée et la tige de valve lorsque la tige est en position intermédiaire. En d'autres termes, la tige ne présente pas de nervure au moins sur une partie de sa hauteur, de sorte que lorsque la tige est en position intermédiaire, on dispose d'un canal annulaire continu, présentant donc une section dégagée et permettant ainsi de faire passer plus rapidement le liquide dans la chambre de dosage que dans le cas où la tige présente des nervures.

L'invention a par ailleurs pour objet une valve doseuse de distribution d'un aérosol comportant une chambre de dosage et une tige de valve munie d'une extrémité disposée du côté d'un réservoir et d'une extrémité de distribution et montée coulissante dans la chambre de dosage sous l'effet d'un ressort, entre une première position haute, dite position de repos, une deuxième position, dite position intermédiaire de remplissage de la chambre de dosage, et une troisième position, dite position basse finale, dans laquelle le ressort est comprimé, la tige de valve comportant un orifice d'expulsion reliant la chambre de dosage à l'extrémité de distribution lorsque la tige est en position basse finale, et un passage de remplissage reliant un réservoir à la chambre de dosage lorsque la tige de valve est en position intermédiaire de remplissage, la valve comprenant une ouverture annulaire continue d'entrée de l'aérosol dans la chambre de dosage, l'ouverture étant définie par l'espace entre un joint d'entrée et la tige de valve lorsque la tige est en position intermédiaire.

On comprend que cette valve peut comprendre l'une ou plusieurs des caractéristiques présentées dans la présente description, prises seules ou en combinaison.

L'invention sera mieux comprise à la lecture de la description qui va suivre, donnée uniquement à titre d'exemple et faite en se référant aux dessins dans lesquels :
- La figure 1 est une vue en coupe longitudinale d'une valve doseuse selon un mode de réalisation, dans la position haute de repos, la chambre de dosage étant isolée de l'extérieur du dispositif de distribution et de l'intérieur du réservoir.
- La figure 2 est une vue similaire à la figure 1, dans laquelle la valve se trouve dans la position intermédiaire, dans laquelle la chambre de dosage communique avec l'intérieur du réservoir et est isolée de l'extérieur du dispositif.
- La figure 3 est une vue similaire à la figure 1, dans laquelle la valve se trouve en position basse finale, dans laquelle la chambre de dosage communique avec l'extérieur du dispositif et est isolée de l'intérieur du réservoir.
- Les figures 4A et B sont deux différentes vues en coupe longitudinale de la tige de la valve de la figure 1.

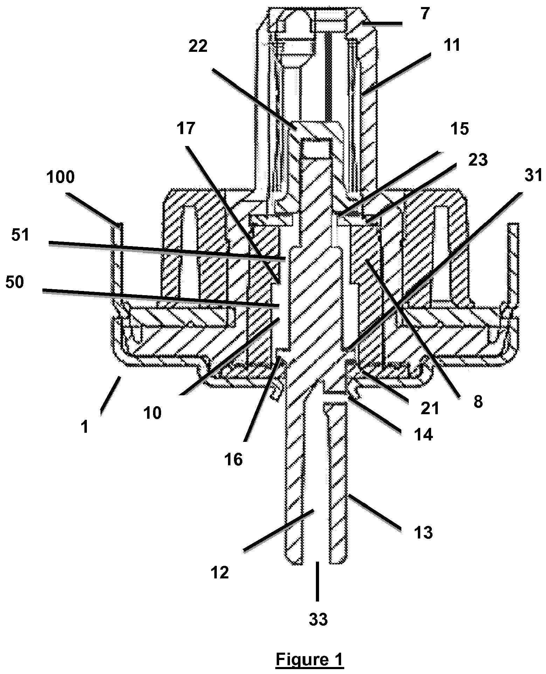

En se référant notamment à la figure 1, on a représenté une valve 1 de type valve doseuse pour la distribution sous forme aérosol d'un produit fluide, notamment médicamenteux, au moyen d'un gaz propulseur, notamment du type HFA. Bien entendu, la présente invention peut également s'appliquer à des valves d'un autre type ou utilisées dans des domaines différents, tels que la parfumerie ou la cosmétique, et avec d'autres gaz propulseurs, par exemple du CFC ou du gaz comprimé.

La valve est apte ou adaptée à fonctionner en position inversée, c'est-à-dire dans la position telle que représentée dans les dessins. En d'autres termes, la valve de l'invention est destinée à être utilisée dans une position où la valve est située sous le réservoir contenant le produit à distribuer, en prenant comme référence le sens de la gravité.

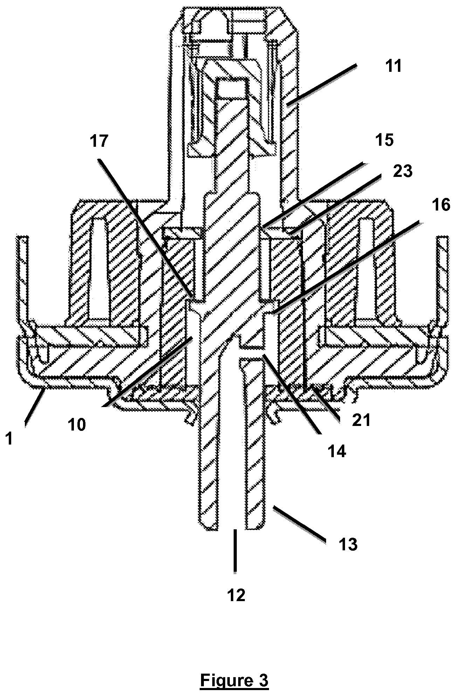

La valve 1 représentée sur la figure 1 comporte un corps de valve 7 dans lequel est rapportée notamment une bague 8, délimitant une chambre de dosage 10, ou chambre de dose. Une tige de valve 13 est montée coulissante dans la chambre de dosage 10, entre une première position haute, dite position de repos, représentée sur la figure 1, et une troisième position de distribution, ou position basse finale, représentée sur la figure 3, dans laquelle la tige de valve est enfoncée axialement vers l'intérieur, ou vers le bas, de la valve 1, en étant mise en butée. La tige de valve 13 est sollicitée vers sa position de repos par un ressort 11, ou moyen de rappel, qui se comprime lorsqu'un utilisateur actionne la valve et pousse la tige de valve axialement à l'intérieur de la valve. Lorsque l'utilisateur relâche sa force d'actionnement, le ressort 11 comprimé rappelle la tige de valve 13 de sa position de distribution vers sa position de repos.

Au cours de l'actionnement de la tige de valve 13, de la position haute à la position basse, ou lorsque la tige de valve 13 est ramenée de sa position basse finale à sa position haute de repos, la tige de valve 13 prend dans une deuxième position, dite position intermédiaire, permettant à la chambre de dosage 10 de communiquer avec le réservoir sur lequel est monté la valve. On notera que les première, deuxième et troisième positions de la tige correspondent à des positions distinctes.

La tige de valve comporte, dans sa partie haute, un canal axial central 12 débouchant d'un coté sur un orifice de sortie axiale 33, destiné à être raccordé à un embout de distribution, par exemple un embout de pulvérisation, et de l'autre coté sur un canal radial 14, qui débouche dans la chambre de dosage 10 lorsque la tige de valve 13 est en position de distribution. La chambre de dosage 10 communique avec un réservoir et avec l'orifice de sortie 33 respectivement grâce à un passage de remplissage 15 et au canal 14, appelé également orifice d'expulsion. A cet effet, la valve 1 comporte un joint haut 21, ou joint de sortie, formant une étanchéité entre la chambre de dosage et l'extérieur, et un joint bas 23, ou joint d'entrée, formant une étanchéité entre le réservoir et la chambre de dosage. On comprend que lorsque le passage 15, respectivement14, est fermé, la tige de valve 13 coulisse de manière étanche contre le joint bas 23, respectivement contre le joint haut 21, de sorte que du liquide ne peut pas s'infiltrer entre la tige 13 et le joint 23, respectivement entre la tige 13 et le joint 21.

La valve, et plus précisément le corps de valve 7, est assemblée sur le réservoir au moyen d'un organe de fixation 100, qui est avantageusement une férule ou capsule à sertir comme représentée sur les figures 1 à 3. Il est à noter ici que l'organe de fixation 100 pourrait être d'un type différent, par exemple un moyen de vissage, d'encliquetage ou similaire.

La chambre de dosage 10 est constituée dans cet exemple d'un compartiment cylindrique haut 50 et d'un compartiment cylindrique bas 51, le diamètre du compartiment haut étant plus grand que le diamètre du compartiment bas. Un épaulement 17 est ménagé à l'interface entre les deux compartiments. En d'autres termes, la chambre de dosage 10 de la valve est constituée de la manière suivante :
- la partie haute 50 de la chambre de dosage 10 est essentiellement cylindrique de section circulaire, d'un premier diamètre déterminé, et
- la partie basse 51 de la chambre de dosage est essentiellement cylindrique de section circulaire, d'un second diamètre déterminé ; le second diamètre de la partie basse de la chambre de dosage étant inférieur à celui de la partie haute de la chambre de dosage,
les deux cylindres étant coaxiaux et juxtaposés dans la direction axiale, l'un étant dans le prolongement de l'autre,
la somme des volumes des deux cylindres, à laquelle on retranche le volume de la tige de valve 13 dans cette zone, définissant le volume de la dose distribuée par la valve 1, lors de son actionnement.

Le compartiment cylindrique bas 51 et le compartiment cylindrique haut 50 ont chacun une hauteur dans la dimension axiale du dispositif comprise entre ¼ et ¾ de la hauteur totale de la chambre de dosage. Dans l'exemple illustré sur les figures, le compartiment cylindrique bas 51 a une hauteur dans la dimension axiale du dispositif comprise entre ¼ et ½ de la hauteur totale de la chambre de dosage, plus précisément une hauteur voisine de ⅓ de la hauteur totale de la chambre de dosage.

La paroi basse de la chambre de dosage 10 est délimitée notamment par le joint bas 21, et la paroi haute 10 de la chambre de dosage est délimitée notamment par le joint 23.

L'interface entre la partie basse et la partie haute de la chambre de dosage 10 forme l'épaulement 17.

On définit ici par position basse finale la position prise par la tige de valve 13 lorsque celle-ci est actionnée et que la tige de valve entre en butée avec l'épaulement 17 ménagé dans la chambre de dosage. Cette position basse finale est également appelée position de distribution de l'aérosol, puisque l'orifice de distribution 14 est alors en communication avec la chambre de dosage 10 et permet la libération de l'aérosol par l'extrémité de distribution 12. On notera que l'orifice 14 est en communication avec l'extérieur avant que l'on atteigne la position basse finale, et que la position basse finale correspond à une position de distribution parmi plusieurs positions de distribution successives. Cette position est représentée à la figure 3. On notera qu'en position basse finale ; les deux parties 50 et 51 de la chambre communiquent entre elles. En d'autres termes, il n'y a jamais d'étanchéité entre ces deux parties 50, 51.

La position haute de repos correspond à la position où le ressort est le plus détendu et exerce une poussée minimale sur la tige de valve. La chambre de dosage 10, dans la position de repos, est isolée à la fois de l'extérieur du dispositif et de l'intérieur du réservoir sur lequel est fixé la valve. Cette position est représentée à la figure 1. Du fait de cette double isolation de la chambre de dosage en position de repos, la valve 1 est une valve appelée « à rétention », du fait que la chambre est normalement remplie et le liquide qu'elle contient ne communique ni avec le réservoir, ni avec l'extérieur. On notera que la valve délivre la dose peu avant d'atteindre la position finale de repos.

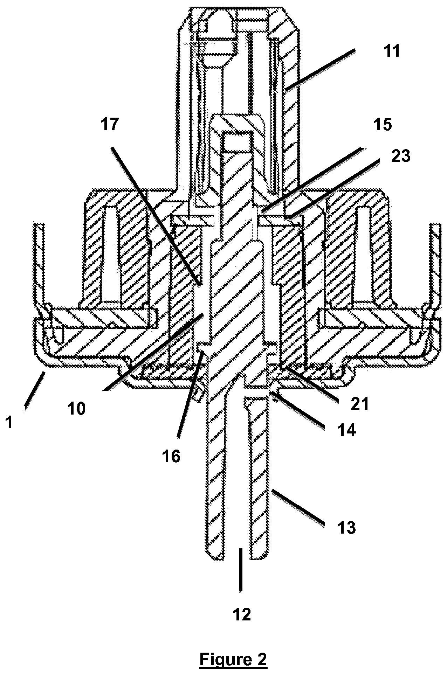

On définit également une position intermédiaire qui correspond à une position prise par la tige de valve 13, entre les positions haute et basse décrites ci-dessus. Dans cette position intermédiaire, la chambre de dosage 10 communique uniquement avec l'intérieur du réservoir sur lequel est montée la valve 1. Cette position est représentée à la figure 2.

La figure 1 montre la valve 1 en position haute, ou position de repos.

Dans cette position, la chambre de dosage 10 est isolée de manière étanche de l'extérieur du dispositif et de l'intérieur du réservoir sur lequel est montée la valve.

L'étanchéité de la chambre de dosage 10 est assurée :
- dans la partie haute de la chambre de dosage 10, par coopération radiale entre le joint 21 et la tige de de valve 13, ainsi que par coopération axiale entre la saillie 16 et le joint 21, et
- dans la partie basse de la chambre de dosage 10, par coopération axiale entre le joint 23 et une partie de la tige de valve 13. Plus précisément, la tige de valve comprend une partie 22, rapportée sur son extrémité basse 40, formant ici un capuchon.

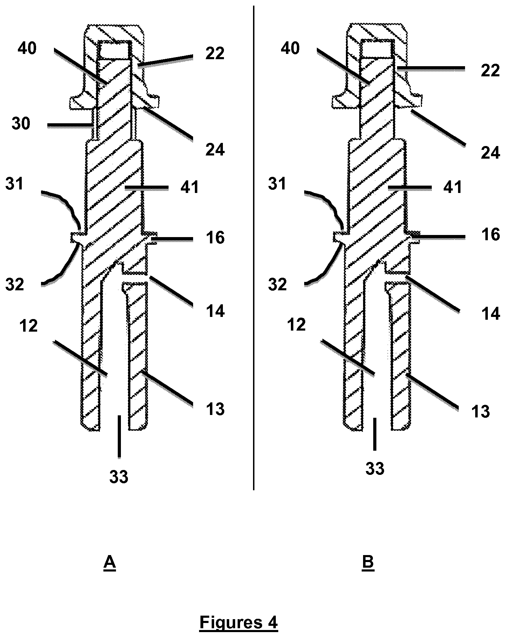

En position de repos, l'extrémité basse 40 de la tige de valve 13 orientée vers le fond de la valve, plus précisément le capuchon 22, coopère avec le ressort 11. Le capuchon 22 possède une surface essentiellement plane et horizontale 24, opposée à la surface coopérant avec le ressort 11 et représentée sur les figures 4. Cette surface plane 24, qui sert de surface d'appui contre le joint bas 23, entre en butée avec le joint bas 23 dans la position de repos de la tige de valve 13. La coopération entre le capuchon 22 et le joint 23 assure l'étanchéité de la partie basse de la chambre de dosage 10 dans cette position. Aussi, en position de repos, le joint 23 et la surface plane coopèrent axialement, par écrasement du joint 23, afin d'assurer l'étanchéité de la chambre de dosage 10. Si le dispositif auquel est fixée la valve est en position « tête en haut » (la valve étant en position inverse à celle représentée dans les figures), l'aérosol contenu dans la chambre de dosage ne peut pas s'échapper vers le réservoir. Par ailleurs, l'étanchéité axiale a pour effet de limiter l'usure du joint 23 au cours du coulissement de la tige 13, comme cela serait le cas dans le cas d'une mobilisation radiale du joint 23. On notera que cette mobilisation radiale du joint 23 peut avoir légèrement lieu lorsque la tige de valve comprend des nervures interférant légèrement avec le joint 23. Ainsi il est particulièrement intéressant de prévoir une tige 13 sans nervures coopérant avec le joint 23.

Toujours en position de repos, la partie haute de la chambre de valve 10 est fermée hermétiquement selon deux moyens :
- un premier moyen consistant en la coopération radiale entre la tige de valve 13 et le joint haut 21 pour assurer l'étanchéité de la chambre de dosage 10, et
- un moyen auxiliaire consistant en une coopération axiale entre une saillie 16 de la tige de valve 13 et le joint haut 21.

Ainsi, grâce au moyen auxiliaire, l'étanchéité de la partie haute de la chambre de dosage est augmentée par écrasement du joint 21 par la saillie annulaire 16 de la tige de valve. L'aérosol contenu dans la chambre de dosage 10, lorsque la valve est dans la position retournée comme indiquée dans les figures, ne peut donc pas s'échapper vers l'extérieur.

Avantageusement, la saillie 16 de la tige de valve 13 forme un épaulement 31 définissant une surface essentiellement plane et horizontale qui entre en butée avec l'épaulement 17 de la chambre de dosage 10. La saillie 16 de la tige de valve 13 forme également un second épaulement 32 opposé à l'épaulement 31, le second épaulement 32 formant également une surface essentiellement plane qui entre en butée avec le joint haut 21, lorsque la tige de valve est en position haute, ou position repos.

La mise en butée de la seconde surface de la saillie de la tige de valve 13 avec le joint haut 21 sert à obstruer hermétiquement l'extrémité de sortie 12 de la chambre de dosage 10 lorsque la tige de valve est dans une position haute de repos.

La saillie 16 de la tige de valve 13, de par ses deux épaulements portés par une seule saillie, permet de diminuer les tolérances de fabrication de la tige. Par ailleurs, la présence d'une seule saille 16 présentant deux épaulements permet de réduire le volume occupé par la tige de valve 13 dans la chambre de dosage 10, et d'améliorer la précision d'un système de comptage de doses lorsqu'il est couplé à la valve doseuse.

Lorsque la tige de valve 13 est sollicitée dans sa position de distribution, comme indiqué à la figure 3, par compression du ressort 11, l'épaulement 16 ménagé sur la tige de valve entre en butée avec l'épaulement 17 de la chambre de dosage. Cet épaulement 16 de la tige de valve 13 est avantageusement une saillie annulaire, ayant pour effet d'augmenter la solidité de l'épaulement 16 en cas de butée trop forte contre l'épaulement 17 de la chambre de dosage. On peut toutefois prévoir d'autres formes d'épaulements, notamment sous forme de saillie(s) partiellement annulaire(s). On comprend que le ressort 11 agit comme organe de rappel de la tige de valve 13 vers sa position de repos. Il est entendu que tout organe élastique exerçant le même effet sur la tige de valve est également adapté et peut être appelé ressort.

La tige de valve 13 ne peut pas être sollicitée axialement au-delà de la l'épaulement 17 de la chambre de dosage, il s'agit donc de sa position basse finale ou position de distribution.

La mise en butée de la tige de valve 13 a pour effet de réduire la contrainte du ressort 11, du fait qu'il n'est pas forcément comprimé jusqu'au bout, et d'assurer sa longévité.

On constate en effet que dans le domaine des valves doseuses, les ressorts sollicités à leur maximum, dits ressorts fonctionnant en fin de course, ont tendance à se mettre de travers, c'est-à-dire à se déplacer de telle sorte qu'ils ne sont plus positionnés axialement par rapport à la tige de valve (l'enveloppe extérieure du ressort n'est plus strictement un cylindre). Dans une telle position, le ressort peut exercer un éffort radial en complément de l'effort axial, cette composante radiale pouvant déplacer la tige de valve. Un tel changement de position du ressort 11, non seulement est susceptible de modifier la position de fin de course de la tige 13, mais peut également provoquer des pertes d'étanchéité entre la tige de valve 13 et les joints 21 ou 23.

On comprend qu'en position de repos dans la présente valve à rétention, la surface d'appui 24 du capuchon et la surface 32 de la saillie 16 sont simultanément en appui sur des joints 21, 23, ce qui garantit l'isolation de la chambre de dosage par rapport au réservoir et à l'extérieur. On comprend par ailleurs que les joints 21, 23 sont en matériau élastomère, sans quoi l'étanchéité serait théoriquement impossible car on disposerait alors de matériaux indéformables.

En se référant notamment à la figure 2, la tige de valve 13 peut coulisser dans la chambre de dosage 10, entre les joints haut 23 et bas 21, dans une position dite intermédiaire de remplissage.

Lorsque la tige de valve 13 est mobilisée vers le bas de la valve, exerçant une poussée sur le ressort 11, la valve dans sa position intermédiaire telle que définie précédemment permet à l'aérosol d'entrer depuis le réservoir vers la chambre de dosage 10, par la partie basse de la chambre de dosage.

L'ouverture dans la partie basse de la chambre de dosage 10 correspond à une ouverture annulaire 15 définie entre le joint bas 23 et la partie basse 40 de la tige de valve 13. Cette ouverture 15 et continue dans l'exemple, mais pourrait éventuellement être semi-annulaire, sous forme de secteurs d'anneau délimités par des nervures qui pourraient éventuellement être ménagées sur la tige 13. Sur la partie basse 40 de la tige de valve 13, la tige de valve ne coopère pas radialement, au moins en partie, avec le joint bas 23, créant ainsi un espace libre par lequel l'aérosol contenu dans le réservoir sur lequel est montée la valve peut pénétrer dans la chambre de dosage 10.

Selon un mode de réalisation particulier, la partie basse 40 de la tige de valve 13 qui ne coopère pas au moins partiellement avec le joint haut 23 pourrait être de forme semi annulaire interrompue par une ou plusieurs, notamment de deux à six, préférentiellement de trois à six, nervures axiales 30. La présence de nervures 30 présente l'avantage de renforcer la tige de valve dans cette zone, mais l'inconvénient toutefois de diminuer la section du passage 15. Une telle tige de valve 13 est représentée à la figure 4A.

Selon un mode de réalisation préféré, la tige de valve 13 ne comporte pas de nervures axiales 30, et présente donc une partie basse 40 annulaire telle que représentée à la figure 4B. Ainsi, du fait qu'il n'y a pas de nervures, le passage 15 est une ouverture annulaire continue d'entrée de l'aérosol dans la chambre de dosage. Il en résulte que la section de passage est plus importante, ce qui est particulièrement intéressant dans le cas d'une valve à rétention.

La tige de valve 13 peut enfin prendre une quatrième position dans laquelle la chambre de dosage 10 est isolée de l'extérieur et de l'intérieur du réservoir. Dans cette quatrième position, la tige de valve a coulissé axialement entre les joints bas 23 et haut 21, mais l'épaulement 31 n'est pas encore entré en butée avec l'épaulement 17 de la chambre de dosage 10.

La partie haute de la chambre de dosage est toujours fermée par la partie de la tige de valve 13 comprise au-dessus de la saillie 16, sans pour autant que l'orifice 14, ou un canal radial 14 ne soit en contact avec l'intérieur de la chambre de dosage 10.

La partie basse de la chambre de dosage 10 est obstruée par la coopération de la partie 41 de la tige de valve 13 immédiatement au-dessus de la partie basse 40 de la tige de valve 13.

Le diamètre de la partie 41 de la tige de valve 13 étant plus important que le diamètre interne du joint 23, la partie 41 coopère radialement avec le joint 23, obstruant ainsi la partie basse de la chambre de dosage 10.

Une telle obstruction de la partie basse de la chambre de dosage 10 a pour effet d'éviter la communication entre le réservoir et l'extérieur du dispositif lorsque la tige de valve 13 est en position basse finale. Ainsi, seul le contenu de la chambre de dosage 10 peut être distribué.

On notera que l'invention n'est pas limitée aux modes de réalisations présentés ci-dessus mais par la portée des revendications qui suivent.

## Revendications

1. Valve doseuse (1) à rétention pour la distribution d'un aérosol comportant
- une chambre de dosage (10), et
- une tige de valve (13) munie d'une extrémité disposée du côté d'un réservoir et d'une extrémité de distribution (12) et montée coulissante dans la chambre de dosage (10) sous l'effet d'un ressort (11), entre une première position haute, dite position de repos, où la chambre de dosage (10) est isolée de l'intérieur du réservoir et de l'extérieur, une deuxième position, dite position intermédiaire de remplissage de la chambre de dosage, et une troisième position, dite position basse finale, dans laquelle le ressort est comprimé,
la tige de valve (13) comportant un orifice d'expulsion (14) reliant la chambre de dosage (10) à l'extrémité de distribution lorsque la tige est en position basse finale, et un passage de remplissage (15) reliant un réservoir à la chambre de dosage (10) lorsque la tige de valve est en position intermédiaire de remplissage,
**caractérisée en ce que** la chambre de dosage comporte un compartiment cylindrique haut (50) et un compartiment cylindrique bas (51), le diamètre du compartiment haut étant plus grand que le diamètre du compartiment bas.

2. Valve doseuse à rétention pour la distribution d'un aérosol selon la revendication 1, dans laquelle un épaulement (17) est ménagé à l'interface entre les deux compartiments (50, 51), la position basse finale de la tige de valve étant définie par une mise en butée d'un épaulement (31) ménagé sur la tige de valve avec l'épaulement (17) ménagé à l'intérieur de la chambre de dosage à l'interface entre les deux compartiments (50, 51).

3. Valve doseuse à rétention pour la distribution d'un aérosol selon la revendication 2, dans laquelle l'épaulement (31) ménagé sur la tige de valve est porté par une saillie (16) assurant également une fonction de mise en butée de la tige de valve avec une paroi haute (21) de la chambre de dosage lorsque la tige de valve est en position de repos.

4. Valve doseuse à rétention pour la distribution d'un aérosol selon l'une quelconque des revendications précédentes, dans laquelle le compartiment cylindrique bas (51) et/ou le compartiment cylindrique haut (50) a une hauteur dans la dimension axiale de la valve comprise entre ¼ et ¾ de la hauteur totale de la chambre de dosage.

5. Valve doseuse à rétention pour la distribution d'un aérosol selon l'une quelconque des revendications précédentes, dans laquelle la valve comprend une ouverture annulaire continue d'entrée de l'aérosol dans la chambre de dosage, l'ouverture étant définie par l'espace entre un joint d'entrée (23) et la tige de valve (13) lorsque la tige est en position intermédiaire.

6. Valve doseuse à rétention pour la distribution d'un aérosol selon l'une quelconque des revendications précédentes, dans lequel, en position basse finale de la tige, le ressort (11) n'est pas complétement comprimé.

7. Valve doseuse à rétention pour la distribution d'un aérosol selon l'une quelconque des revendications précédentes, où l'extrémité de la tige de valve comprend une première surface d'appui (24) contre un joint d'entrée de la chambre (23) de dosage assurant une première étanchéité de la chambre de dosage par rapport à un réservoir lorsque la tige est en position de repos.

8. Valve doseuse à rétention pour la distribution d'un aérosol selon la revendication précédente, dans laquelle la première étanchéité entre l'extrémité de la tige et le joint est réalisée dans la direction axiale de la valve.

9. Valve doseuse à rétention pour la distribution d'un aérosol selon l'une quelconque des revendications précédentes, où la tige de valve comprend une deuxième surface d'appui contre un joint d'entrée (23) de la chambre de dosage assurant une deuxième étanchéité de la chambre de dosage par rapport à un réservoir lorsque la tige est en position basse finale.

10. Valve doseuse à rétention pour la distribution d'un aérosol selon la revendication précédente, dans laquelle la deuxième étanchéité entre la tige (13) et le joint (23) est réalisée dans la direction radiale de la valve.

## Patentansprüche

1. Dosierrückschlagventil (1) zur Abgabe eines Aerosols, aufweisend
- eine Dosierkammer (10) und
- einen Ventilschaft (13), der mit einem Ende, das auf der Seite eines Tanks angeordnet ist, und mit einem Abgabeende (12) versehen ist und in der Dosierkammer (10) unter der Einwirkung einer Feder (11) verschiebbar gelagert ist zwischen einer ersten oberen Stellung, so genannte Ruhestellung, wo die Dosierkammer (10) von dem Inneren des Tanks und von außen isoliert ist, einer zweiten Stellung, so genannte mittlere Stellung zum Befüllen der Dosierkammer, und einer dritten Stellung, so genannte untere Endstellung, in der die Feder zusammengedrückt ist,
wobei der Ventilschaft (13) eine Ausstoßöffnung (14) aufweist, welche die Dosierkammer (10) mit dem Abgabeende verbindet, wenn der Schaft in der unteren Endstellung ist, und einen Befülldurchlass (15) aufweist, der einen Tank mit der Dosierkammer (10) verbindet, wenn der Ventilschaft in der mittleren Befüllstellung ist,
**dadurch gekennzeichnet, dass** die Dosierkammer einen zylindrischen oberen Behälter (50) und einen zylindrischen unteren Behälter (51) aufweist, wobei der Durchmesser des oberen Behälters größer ist als der Durchmesser des unteren Behälters.

2. Dosierrückschlagventil zur Abgabe eines Aerosols nach Anspruch 1, wobei ein Absatz (17) an der Schnittstelle zwischen den zwei Behältern (50, 51) vorgesehen ist, wobei die untere Endstellung des Ventilschafts durch das Inanschlagbringen eines Absatzes (31), der an dem Ventilschaft vorgesehen ist, mit dem Absatz (17), der im Inneren der Dosierkammer an der Schnittstelle zwischen den zwei Behältern (50, 51) vorgesehen ist, definiert wird.

3. Dosierrückschlagventil zur Abgabe eines Aerosols nach Anspruch 2, wobei der Absatz (31), der an dem Ventilschaft vorgesehen ist, von einem Vorsprung (16) getragen wird, der auch eine Aufgabe des Inanschlagbringens des Ventilschafts mit einer oberen Wand (21) der Dosierkammer sicherstellt, wenn der Ventilschaft in Ruhestellung ist.

4. Dosierrückschlagventil zur Abgabe eines Aerosols nach einem der vorhergehenden Ansprüche, wobei der zylindrische untere Behälter (51) und/oder der zylindrische obere Behälter (50) eine Höhe in der axialen Dimension des Ventils hat, die zwischen ¼ und ¾ der Gesamthöhe der Dosierkammer beträgt.

5. Dosierrückschlagventil zur Abgabe eines Aerosols nach einem der vorhergehenden Ansprüche, wobei das Ventil eine durchgängige ringförmige Öffnung für den Einlass des Aerosols in die Dosierkammer umfasst, wobei die Öffnung durch den Raum zwischen einem Einlassdichtungselements (23) und dem Ventilschaft (13) definiert wird, wenn der Schaft in der mittleren Stellung ist.

6. Dosierrückschlagventil zur Abgabe eines Aerosols nach einem der vorhergehenden Ansprüche, wobei, in der unteren Endstellung des Schafts, die Feder (11) nicht vollständig zusammengedrückt ist.

7. Dosierrückschlagventil zur Abgabe eines Aerosols nach einem der vorhergehenden Ansprüche, wo das Ende des Ventilschafts eine erste Oberfläche zum Abstützen (24) gegen ein Einlassdichtungselement (23) der Dosierkammer umfasst, die eine erste Abdichtung der Dosierkammer relativ zu einem Tank sicherstellt, wenn der Schaft in Ruhestellung ist.

8. Dosierrückschlagventil zur Abgabe eines Aerosols nach dem vorhergehenden Anspruch, wobei die erste Abdichtung zwischen dem Ende des Schafts und dem Dichtungselement in der axialen Richtung des Ventils erfolgt.

9. Dosierrückschlagventil zur Abgabe eines Aerosols nach einem der vorhergehenden Ansprüche, wo der Ventilschaft eine zweite Oberfläche zum Abstützen gegen ein Einlassdichtungselement (23) der Dosierkammer umfasst, die eine zweite Abdichtung der Dosierkammer relativ zu einem Tank sicherstellt, wenn der Schaft in der unteren Endstellung ist.

10. Dosierrückschlagventil zur Abgabe eines Aerosols nach dem vorhergehenden Anspruch, wobei die zweite Abdichtung zwischen dem Schaft (13) und dem Dichtungselement (23) in der radialen Richtung des Ventils erfolgt.

## Claims

1. A retention metering valve for dispensing an aerosol, comprising
- a metering chamber (10), and
- a valve stem (13) provided with an end positioned on the side of a tank and a dispensing end and mounted to slide in the metering chamber (10) under the effect of a spring (11), between a first top position, called rest position, wherein the metering chamber (510) is isolated both from the inside of the tank and the outside, a second position, called intermediate metering chamber filling position, and a third position, called final bottom position, in which the spring is compressed,
the valve stem (13) comprising an expulsion orifice (14) linking the metering chamber (10) to the dispensing end when the stem is in the final bottom position, and a filling passage (15) linking a tank to the metering chamber when the valve stem is in the intermediate filling position,
**characterized in that** the metering chamber comprises a top cylindrical compartment (50) and a bottom cylindrical compartment (51), the diameter of the top compartment being greater than the diameter of the bottom compartment.

2. The retention metering valve for dispensing an aerosol according to claim 1, in which a shoulder (17) is formed at the interface between the two compartments, the final bottom position of the valve stem being defined by an abutment of a shoulder (31) formed on the valve stem with the shoulder formed inside the metering chamber at the interface between the two compartments (50,51).

3. The retention metering valve for dispensing an aerosol according to claim 2, in which the shoulder (31) formed on the valve stem is borne by a protuberance (16) also providing a function of abutment of the valve stem with a top wall (21) of the metering chamber when the valve stem is in the rest position.

4. The retention metering valve for dispensing an aerosol according to anyone of the preceding claims, in which the bottom cylindrical compartment and/or the top cylindrical compartment (50) has a height in the axial dimension of the device lying between 1/4 and 3/4 of the total height of the metering chamber.

5. The retention metering valve for dispensing an aerosol according to anyone of the preceding claims, in which the valve comprises a continuous annular aperture for the inlet of the aerosol into the metering chamber, the aperture being defined by the space between an inlet seal (23) and the valve stem (13) when the stem is in the intermediate position.

6. The retention metering valve for dispensing an aerosol according to anyone of the preceding claims, in which, in the final bottom position of the stem, the spring (11) is not completely compressed.

7. The retention metering valve for dispensing an aerosol according to anyone of the preceding claims, in which the end of the valve stem comprises a first bearing surface (24) against an inlet seal of the metering chamber (23) ensuring a first sealing of the metering chamber with respect to a tank when the stem is in the rest position.

8. The retention metering valve for dispensing an aerosol according to anyone of the preceding claims, the first sealing between the end of the stem and the seal is produced in the axial direction of the device.

9. The retention metering valve for dispensing an aerosol according to the preceding claim, in which the valve stem comprises a second bearing surface against an inlet seal (23) of the metering chamber providing a second sealing of the metering chamber with respect to a tank when the stem is in the final bottom position.

10. The retention metering valve for dispensing an aerosol according to anyone of the preceding claims, the second sealing between the stem (13) and the seal (23) is produced in the radial direction of the device.
